# EUROPEAN PATENT SPECIFICATION

(11) **EP 1 413 871 B1**
(45) Date of publication and mention of the grant of the patent: **29.07.2009**
(21) Application number: 03256594.7
(22) Date of filing: 20.10.2003
(51) Int. Cl.: G01M 11/04

(54) **Optical table**
Optischer Tisch
Table optique

(30) Priority: 25.10.2002 GB 0224894
(43) Date of publication of application: 28.04.2004
(73) Proprietor: Thorlabs, Inc., Newton New Jersey 07860 (US)
(72) Inventor: Sargeant, Malcolm, c/o Melles Griot Limited, Cambridgeshire, CB7 4EX (GB); Steventon, Kelvin, c/o Melles Griot Limited, Cambridgeshire, CB7 4EX (GB)
(74) Representative: Haines, Miles John L.S.

(56) References cited:
- US-A- 4 621 006
- US-A- 4 735 089
- US-A- 5 061 541
- US-A- 5 962 104
- US-B1- 6 227 515

## Description

### BACKGROUND OF THE INVENTION

The invention relates to optical tables and their manufacture.

Optical tables provide platforms for mounting components in a wide variety of optical applications. Although developed for optical applications, optical tables also now find applications outside the optical field.

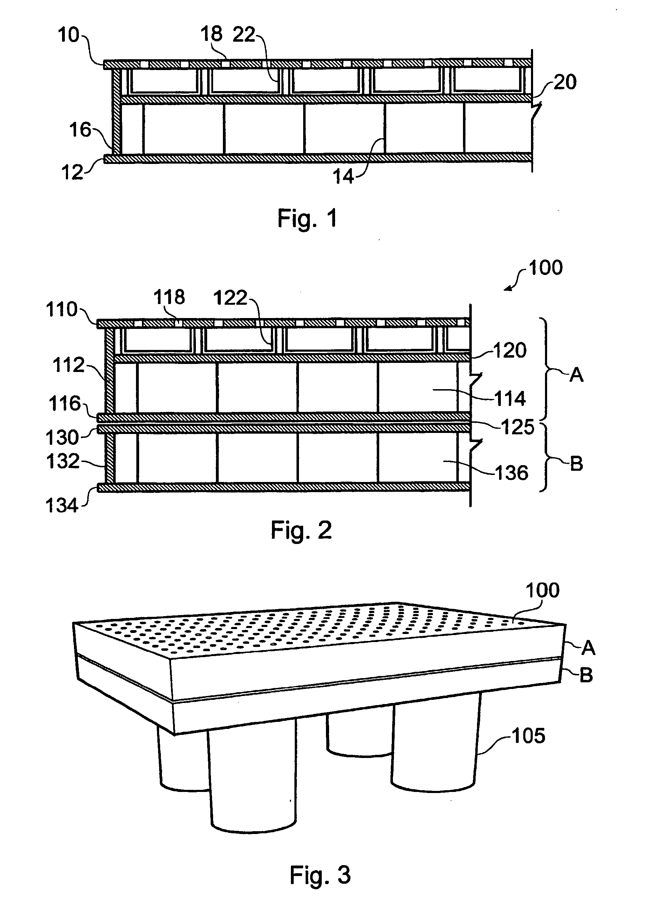

Figure 1 shows schematically in cross-section a current design of optical table. An optical table is usually mounted on legs designed to provide vibration isolation, often with pneumatic damping. The table is formed from a steel top skin 10 separated from a steel bottom skin 12 by a steel core 14 encased in side walls 16. The top skin 10 has a two-dimensional grid of standard threaded holes 18, most commonly M6, spaced apart by a grid spacing of 25 or 50 mm. Equivalent Imperial dimension tables are also used, especially in the United States. In early designs, the top skin was directly bonded to the formed steel core. Some tables still use such a design for cost reasons. However, modem designs provide spacing under the top skin to prevent threads of components mounted on the table impinging directly on the core. To effect this, the illustrated design provides a so-called midskin 20 placed a short distance below the top skin 10 and secured to the steel side walls 16. Steel sealing cups 22 are arranged between the midskin 20 and topskin 10 to provide greater structural rigidity and to prevent liquid ingress to the main structure.

The tables are manufactured, by the applicant company, by bonding the various skins, core and sidewalls together in a high temperature press using hot cure adhesives. Tables are available in different thicknesses, the thickness variation being accommodated by varying the core thickness. Example tabletop thicknesses are 210 mm, 310 mm and 460 mm. Example table lateral dimensions range from 0.75 x 2 m to 1.5 x 6 m.

Other designs use alternatives to formed steel cores, such as honeycomb aluminium cores or composite cores.

Thick optical tables are sometimes demanded to provide greater rigidity which is necessary for large area tables or for superior vibration isolation properties. However, it is difficult to make tables thicker than around the 310 mm size referred to above. This is because the core is difficult to manage and is prone to tilting over. This is because the core is made up of a number of sheets that are stacked vertically like books on a shelf and are able to tilt over from the desired vertical stacking prior to completion of bonding.

US 5 061 541 A discloses a honeycomb table including a top facing sheet that may be perforated with openings, a bottom facing sheet, at least one layer of rigid corrugated material comprised of valleys and crests, at least one layer of honeycomb core, and preferably at least one internal stiffening sheet in preferably a permanently laminated composite.

US 4 621 006 A discloses honeycomb tables with table leaves with apertures that are rendered clean-room compatible by sealing the honeycomb cells against the table leaf apertures inside the table leaf.

US 6 227 515 B1 discloses a platform, or tabletop, that is useful for mounting and supporting items, such as scientific equipment and the like, wherein the overall mass of the platform may be varied as desired. The platform, or tabletop, includes an upper surface, a lower surface, and an intervening side wall, that, together with the upper and lower surfaces, defines an interior cavity, or cavity enclosure. An intermediate surface partitions the interior cavity into two sections, a bottom section and a top section. An additional mounting surface or tabletop may be attached to the upper surface wherein the mounting surface has a plurality of holes, or apertures, preferably drilled and tapped, that are used to securely mount items such as scientific equipment upon the tabletop.

### SUMMARY OF THE INVENTION

The invention provides a very simple solution to the manufacturing problem of making thick optical tables. The solution adopted is to manufacture individual table units according to standard procedures and then bond them together to make a thicker table.

Accordingly the invention provides a method of manufacturing an optical table comprising: making at least two subassemblies, wherein each subassembly is made by bonding a core to upper and lower skins; and bonding a lower skin of one subassembly to an upper skin of another subassembly arranged below it to form the optical table.

The invention therefore provides an optical table comprising in height order: a top skin, an upper core, an intermediate skin, a lower core and a bottom skin, wherein the intermediate skin will typically comprise two sheets bonded together, namely the upper skin of a lower subassembly bonded to the lower skin of a subassembly above it.

A spacer layer may be arranged under the top skin separated from the upper core by a midskin as in the prior art, for example to provide room for peanuts to be attached to the underside of the top skin, where "peanut" is a term of art. A prior art example of the use of peanuts is shown in Figures 2 and 3 of EP 0 601 892 A2.

The core can be made of a formed steel core or other suitable material such as composite or aluminium honeycomb. A composite material is a structural material made of two or more different materials, e.g. carbon fibre or glass fibre reinforced plastics.

The invention allows a thick table to be made in a simple way, avoiding the manufacturing difficulties associated with thick cores. For example, the table may have a thickness from top skin to bottom skin in excess of at least one of 310, 460 and 600 mm. Each subassembly can be thin enough to avoid manufacturing difficulty, for example each subassembly may have a thickness less than at least one of 350 mm, 300 mm and 250 mm. As well as avoiding manufacturing difficulty, the invention allows different table thicknesses to be produced from a stock of subassemblies of the same thickness, or of a limited number of different thicknesses, by bonding 2, 3, 4 or conceivably more subassemblies together.

The bonding between the subassemblies can be performed using a cold cure adhesive, such as Permabond E32 (RTM) or other two-component epoxy resin, thereby avoiding further use of a hot press. Alternatively, the bonding between the subassemblies could be performed using a hot cure adhesive. Moreover, the subassemblies could be non-adhesively bonded together, for example by welding them together.

In any case an optical table is formed of at least two subassemblies bonded together, each subassembly comprising a core bonded to upper and lower skins, wherein the lower skin of one subassembly is bonded to the upper skin of another subassembly arranged below it.

### BRIEF DESCRIPTION OF THE DRAWINGS

For a better understanding of the invention and to show how the same may be carried into effect reference is now made by way of example to the accompanying drawings in which:
Figure 1 shows schematically in cross-section a prior art optical table;
Figure 2 shows schematically in cross-section an optical table according to an embodiment of the invention; and
Figure 3 shows in perspective an optical table system incorporating the optical table of Figure 2.

### DETAILED DESCRIPTION

Figure 2 shows schematically in cross-section an optical table 100 according to an embodiment of the invention. The table 100 is made of two subassemblies A and B which are bonded together, with subassembly A on top of subassembly B.

Subassembly A is identical to the prior art table illustrated in Figure 1. Namely, a steel top skin 110 is separated from a steel base skin 116 by a core 114 of steel honeycomb encased in steel side walls 112. The top skin 110 has a two-dimensional grid of standard threaded holes 118, most commonly M6, spaced apart by a grid spacing, typically of 25 or 50 mm. Equivalent Imperial dimensions could also be used, i.e. 1/4 inch thread at 1 inch or 2 inch pitch. A so-called midskin 120 is provided a short distance below the top skin 110 and secured to the steel side walls 112. Steel sealing cups 122 are arranged between the midskin 120 and topskin 110 to prevent liquid ingress into the table structure.

Subassembly B is similar in form to a primitive optical table in which the top skin is directly bonded to the honeycomb steel core. Namely, subassembly B comprises a top skin 130 and bottom skin 134 that both directly bond to a core 136 encased in side walls 132. Although this is similar to a primitive optical table, there is of course no provision of tapped holes on the top skin 130.

Subassemblies A and B are first manufactured using a conventional hot press. The completed subassemblies are then bonded together using a conventional cold cure adhesive, such as an epoxy resin adhesive, to form a bond 125 between skins 116 and 130, i.e. by bonding the upper face of subassembly B to the lower face of subassembly A. The upper subassembly can be lowered onto the lower subassembly using a hoist after applying a layer of adhesive to the top skin of the lower subassembly. After drying, the seam formed by the bond is then cleaned up and finished using standard techniques.

The manufactured optical table thus comprises in height order: a top skin 110, an upper core 114, an intermediate skin 116/130, a lower core 136 and a bottom skin 134.

Figure 3 shows in perspective an optical table system incorporating the optical table of Figure 2. The optical table 100 is supported by four vibration isolation mounts 105 which are generally cylindrical in shape and may incorporate pneumatic mountings, as is well known in the art.

It will be appreciated that many variations on this basic design can be made, for example as discussed in the above section entitled summary of the invention.

## Claims

1. An optical table comprising in height order: a top skin (110), an upper core (114), an intermediate skin (116, 130), a lower core (136) and a bottom skin (134);
**characterised in that** the intermediate skin comprises two sheets (116, 130) bonded together.

2. An optical table according to claim 1, further comprising a spacer layer (122) arranged under the top skin and separated from the upper core by a midskin (120).

3. An optical table according to claim 1 or 2, wherein the core is made of formed steel.

4. An optical table according to claim 1 or 2, wherein the core is composite.

5. An optical table according to claim 1 or 2, wherein the core is aluminium honeycomb.

6. An optical table according to any one of the preceding claims, wherein the table has a thickness from top skin to bottom skin in excess of at least one of 310, 460 and 600 mm.

7. An optical table according to any one of the preceding claims, wherein eash core is associated with a subassembly, and each subassembly (A, B) has a thickness less than at least one of 350 mm, 300 mm and 250 mm.

8. An optical table system comprising an optical table according to any one of the preceding claims arranged on a plurality of supporting legs (105).

9. A method of manufacturing an optical table comprising:
making at least two subassemblies (A, B), wherein each subassembly is made by bonding a core to upper and lower skins; and
bonding a lower skin of one subassembly (B) to an upper skin of another subassembly (A) arranged below it to form the optical table.

10. A method according to claim 9, wherein the bonding between the subassemblies is performed using a cold cure adhesive.

11. A method according to claim 9, wherein the bonding between the subassemblies is performed using a hot cure adhesive.

## Patentansprüche

1. Optischer Tisch, der in der Reihenfolge der Höhe aufweist: eine obere Verkleidung (110), einen oberen Kern (114), eine Zwischenverkleidung (116, 130), einen unteren Kern (136) und eine untere Verkleidung (134), **dadurch gekennzeichnet, dass** die Zwischenverkleidung zwei miteinander verbundene Schichten aufweist.

2. Optischer Tisch nach Anspruch 1, der weiterhin aufweist eine Abstandsschicht (122), die unter der oberen Verkleidung und durch eine Mittelverkleidung (120) getrennt von dem unteren Kern angeordnet ist.

3. Optischer Tisch nach Anspruch 1 oder 2, bei dem der Kern aus Formstahl hergestellt ist.

4. Optischer Tisch nach Anspruch 1 oder 2, bei dem der Kern ein Verbundwerkstoff ist.

5. Optischer Tisch nach Anspruch 1 oder 2, bei dem der Kern eine Aluminium-Wabenstruktur ist.

6. Optischer Tisch nach einem der vorherigen Ansprüche, bei dem der Tisch eine Dicke von der oberen Verkleidung zur unteren Verkleidung von mehr als 310, 460 oder 600 mm hat.

7. Optischer Tisch nach einem der vorherigen Ansprüche, bei dem jeder Kern mit einem Unteraufbau verknüpft ist und jeder Unteraufbau (A, B) eine Dicke von weniger als 350 mm, 300 mm oder 250 mm hat.

8. Optisches Tischsystem, das einen optischen Tisch nach einem der vorherigen Ansprüche aufweist, angeordnet auf einer Mehrzahl von Stützbeinen (105).

9. Verfahren zum Herstellen eines optischen Tisches, das aufweist:
Herstellen von zumindest zwei Unteraufbauten (A, B), wobei jeder Unteraufbau hergestellt wird durch Verbinden eines Kerns mit einer oberen und unteren Verkleidung, und
Verbinden einer unteren Verkleidung eines Unteraufbaus (B) mit einer oberen Verkleidung eines anderen Unteraufbaus (A), der unter diesem angeordnet ist, um den optischen Tisch zu bilden.

10. Verfahren nach Anspruch 9, bei dem die Verbindung zwischen den Unteraufbauten unter Verwendung eines Kaltschaumklebstoffes durchgeführt wird.

11. Verfahren nach Anspruch 9, bei dem die Verbindung zwischen den Unteraufbauten unter Verwendung eines Heißklebers durchgeführt wird.

## Revendications

1. Table optique comprenant dans l'ordre des hauteurs : une peau supérieure (110), un noyau supérieur (114), une peau intermédiaire (116, 130), un noyau inférieur (136) et une peau inférieure (134) ;
**caractérisée en ce que** la peau intermédiaire comprend deux feuilles (116, 130) reliées l'une à l'autre.

2. Table optique selon la revendication 1, comprenant en outre une couche d'espacement (122) agencée sous la peau supérieure et séparée du noyau supérieur par une peau intermédiaire (120).

3. Table optique selon la revendication 1 ou 2, dans laquelle le noyau est constitué d'un acier mis en forme.

4. Table optique selon la revendication 1 ou 2, dans laquelle le noyau est composite.

5. Table optique selon la revendication 1 ou 2, dans laquelle le noyau est un nid d'abeille en aluminium.

6. Table optique selon l'une quelconque des revendications précédentes, dans laquelle la table a une épaisseur, de la peau supérieure à la peau inférieure, supérieure à au moins l'une des épaisseurs suivantes : 310 mm, 460 mm et 600 mm.

7. Table optique selon l'une quelconque des revendications précédentes, dans laquelle chaque noyau est associé à un sous-ensemble, et chaque sous-ensemble (A, B) a une épaisseur inférieure à au moins l'une des épaisseurs suivantes : 350 mm, 300 mm et 250 mm.

8. Système de table optique comprenant une table optique selon l'une quelconque des revendications précédentes agencée sur une pluralité de pieds de support (105).

9. Procédé de fabrication d'une table optique consistant à :
réaliser au moins deux sous-ensembles (A, B), dans lequel chaque sous-ensemble est réalisé en reliant un noyau aux peaux supérieure et inférieure ; et
relier une peau inférieure d'un sous-ensemble (B) à une peau supérieure d'un autre sous-ensemble (A) agencé au-dessous de celui-ci pour former la table optique.

10. Procédé selon la revendication 9, dans lequel la liaison entre les sous-ensembles est effectuée en utilisant un adhésif durci à froid.

11. Procédé selon la revendication 9, dans lequel la liaison entre les sous-ensembles est effectuée en utilisant un adhésif durci à chaud.
